(19)

Europäisches Patentamt

European Patent Office

Office européen des brevets

(11) **EP 2 204 649 A1**

(12) **EUROPEAN PATENT APPLICATION**
published in accordance with Art. 153(4) EPC

(43) Date of publication:
**07.07.2010 Bulletin 2010/27**

(21) Application number: **08833810.8**

(22) Date of filing: **25.09.2008**

(51) Int Cl.:
*G01N 33/543* (2006.01)      *G01N 21/27* (2006.01)
*G01N 21/78* (2006.01)

(86) International application number:
**PCT/JP2008/002647**

(87) International publication number:
**WO 2009/041035 (02.04.2009 Gazette 2009/14)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.09.2007   JP 2007254036**

(71) Applicant: **Panasonic Corporation
Kadoma-shi
Osaka 571-8501 (JP)**

(72) Inventors:
  • **MIYOSHI, Koji
    Osaka-shi, Osaka 540-6207 (JP)**

  • **AGA, Masahiro
    Osaka-shi, Osaka 540-6207 (JP)**
  • **TANIDA, Takahiko
    Osaka-shi, Osaka 540-6207 (JP)**
  • **YAMADA, Ryosuke
    Osaka-shi, Osaka 540-6207 (JP)**
  • **KUROKAWA, Hideyuki
    Osaka-shi, Osaka 540-6207 (JP)**
  • **MATSUDA, Yoko
    Osaka-shi, Osaka 540-6207 (JP)**

(74) Representative: **Grünecker, Kinkeldey,
Stockmair & Schwanhäusser
Anwaltssozietät
Leopoldstrasse 4
80802 München (DE)**

(54) **MEASURING METHOD USING BIOSENSOR**

(57)      In a biosensor for measuring the concentration of an object to be analyzed by optical signal detection, when a liquid sample is supplied to a supply part (12), the liquid sample is developed in a development part (13), and color development takes place in a reaction part (14) depending upon the concentration of the object to be analyzed. The absorbance of the reaction part (14) is read. In this case, the amount of the liquid sample supplied into the supply part (12) can be measured by reading the development speed.

FIG. 1

**EP 2 204 649 A1**

## Description

Technical Field

The present invention relates to a measuring method using a biosensor for performing the analysis of a biological sample, and more particularly, to a measuring method of measuring the concentration of an object to be analyzed by performing optical signal detection.

Background Art

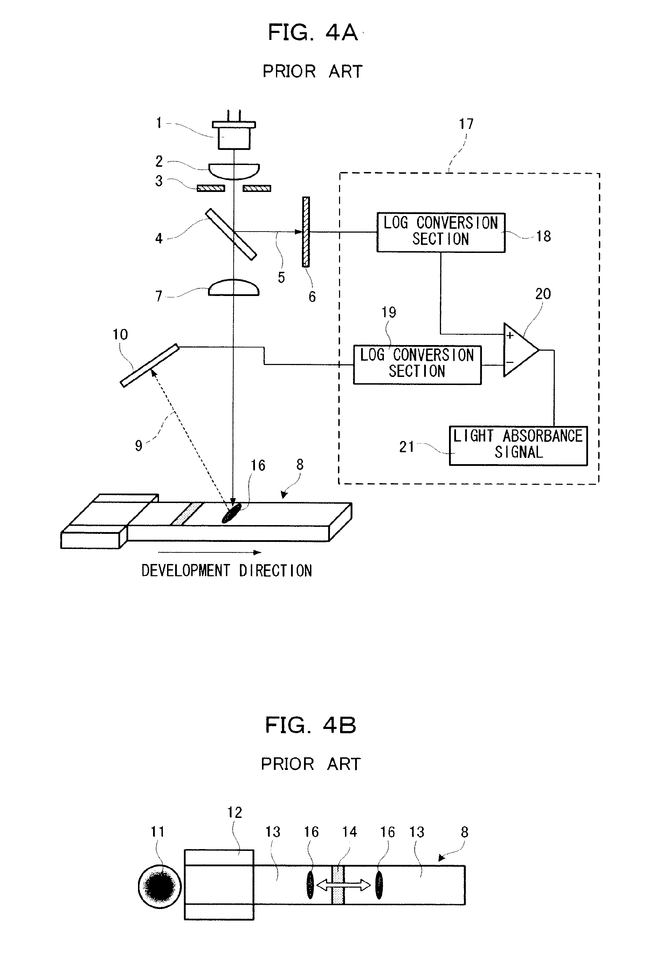

First, a conventional measuring method using a biosensor will be described. Fig. 4A is a view schematically illustrating the configuration of a conventional quantitative measuring apparatus, and Fig. 4B is a view illustrating the configuration of a conventional biosensor.

The quantitative measuring apparatus of Fig. 4A includes a semiconductor laser 1, a collimating lens 2, an opening 3, a beam splitter 4, reference light 5, a first photodiode 6, a cylindrical lens 7, a second photodiode 10 and a measuring unit 17.

The collimating lens 2 converts an emitted light of the semiconductor laser 1 to a parallel beam. The opening 3 restricts a beam. The beam splitter 4 polarizes a beam. The first photodiode 6 receives a beam reflected from the beam splitter 4 as the reference light 5. The cylindrical lens 7 collects a beam, which has been transmitted through the beam splitter 4, and guides the beam to a predetermined position on a biosensor 8. The second photodiode 10 receives a scattered light 9 from the biosensor 8. The measuring unit 17 includes log conversion sections 18 and 19 which perform log conversion on outputs of the photodiodes 6 and 10, and a subtractor 20 which calculates a light absorbance signal 21 by subtracting log conversion values calculated by the log conversion sections 18 and 19.

The biosensor 8 shown in Fig. 4B includes a supply part 12 to which a constant quantity of a liquid sample 11 is added, a development part 13 in which the liquid sample is developed, and a reaction part 14 which develops a color according to the concentration of an object to be analyzed contained in the liquid sample. The biosensor 8 reads the light absorbance signal of the reaction part 14, which develops the color, to obtain the concentration of the object to be analyzed.

Next, the operation of the measuring method will be described.

Light emitted from the semiconductor laser 1 passes through the collimating lens 2, so that the light is converted to a parallel beam. The parallel beam passes through the opening 3, and is then incident on the beam splitter 4. A part of the light beam reflected from the beam splitter 4 is received by the first photodiode 6 as the reference light 5. Meanwhile, the remaining light beam, which has been transmitted through the beam splitter 4, is irradiated by the cylindrical lens 7 onto the reaction part 14 which develops a color on the biosensor 8, and the scattered light 9 from the biosensor 8 is received by the second photodiode 10. Then, the output of the first photodiode 6 having received the reference light 5, and the output of the second photodiode 10 having received the scattered light 9, are subjected to log conversion, and the log conversion value of the second photodiode 10 is subtracted from the log conversion value of the first photodiode 6, so that the light absorbance signal 21 is obtained. The concentration of an object to be analyzed contained in the liquid sample is calculated from the light absorbance signal 21.

However, when the quantity of the liquid sample added is insufficient, or when a development defect occurs due to clogging or the like, the concentration of the object to be analyzed contained in the liquid sample may not be accurately measured.

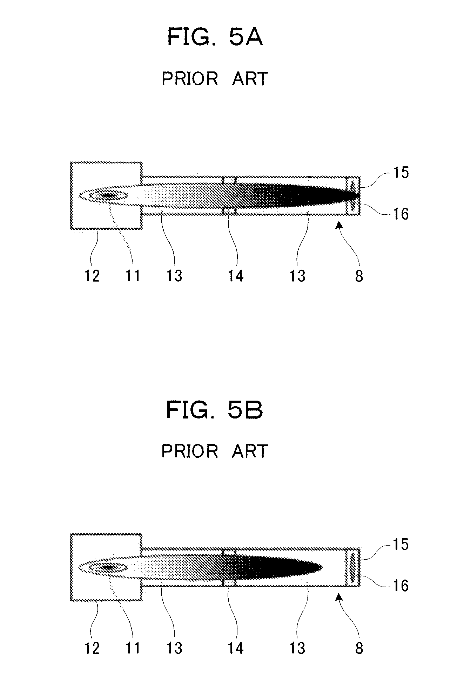

Herein, Fig. 5A is a view illustrating the state of development when a liquid sample is sufficiently added in a conventional biosensor, and shows the development when the liquid sample 11 is sufficiently added to the supply part 12 of the biosensor 8. The added liquid sample 11 reaches a measuring section 15 at a downstream end portion via the development part 13 and the reaction part 14. Meanwhile, Fig. 5B is a view illustrating the state of development when a liquid sample is not sufficiently added in the conventional biosensor. That is, when the quantity of the liquid sample 11 added to the supply part 12 of the biosensor 8 is not sufficient, the liquid sample 11 does not reach the measuring section 15 at the downstream end portion. Whether the liquid sample 11 has reached the measuring section 15 can be determined from a light absorbance signal obtained by irradiating a beam 16 onto the measuring section 15 of the biosensor 8. In this way, according to the measuring method using the conventional biosensor, an insufficient quantity of liquid sample added and a development defect are detected.

Patent Document 1: JP-A-2003-4743

Disclosure of Invention

Problem to be Solved by the Invention

However, according to the conventional configuration, in order to detect an insufficient quantity of the liquid sample added to the biosensor, waiting time until the liquid sample arrives at the downstream end portion of the biosensor is required, and a significant amount of time is required until measurement is performed again. For example, in a measuring method using a biosensor such as immunochromatography, since it requires about 10 minutes to arrive at the downstream end portion, a diagnosis may not be conducted quickly and smoothly.

The invention has been devised to solve the above-described problems, and an object of the invention is to provide a measuring method using a biosensor with speed and high reliability and accuracy.

Means for Solving Problem

In order to solve the above-described problems, a measuring method using a biosensor according to the present invention, the biosensor including a supply part to which a constant quantity of a liquid sample is added, a development part in which the liquid sample is developed, and a reaction part in which the liquid sample undergoes a reaction, the method includes: when measuring the concentration of an object to be analyzed contained in the liquid sample, detecting a development speed at which the liquid sample is developed in the development part; and detecting an insufficient quantity of the liquid sample added to the supply part based on the development speed.

Further, the development speed may be detected using an imaging device.

Further, the development speed may be calculated from time over which a front end image of the liquid sample moves among pixels of the imaging device.

Further, the insufficient quantity of the added liquid sample may be detected by comparing the maximum development speed calculated from a relation between a required quantity of the liquid sample added and a size of the development part, with the detected development speed.

Further, a position reference arbitrarily set may be detected, the development speed and arrival time at which the liquid sample arrives at the downstream end portion of the development part from the position reference may be calculated, and the insufficient quantity of the liquid sample added to the supply part may be detected based on the arrival time.

Further, the position reference may be a mark provided at the downstream end portion of the development part or in the vicinity of the development part.

Further, the arrival time may indicate time to when the liquid sample arrives at the downstream end portion of the development part from addition time when the liquid sample is added to the supply part, the addition time being calculated based on the position reference and the development speed.

Further, the measurement of the reaction part may be performed after the liquid sample arrives at the downstream end portion.

Further, during the measurement of the reaction part, arrival of the liquid sample at the downstream end portion of the development part may be confirmed through the development of the liquid sample.

Advantageous Effects

According to the present invention, there is provided a measuring method using a biosensor, the biosensor including a supply part to which a constant quantity of a liquid sample is added, a development part in which the liquid sample is developed, and a reaction part in which the liquid sample undergoes a reaction, for measuring the concentration of an object to be analyzed contained in the liquid sample. In the measuring method, the quantity of the liquid sample added to the supply part is specified based on a development speed detected by a detection unit for detecting the development speed at which the liquid sample is developed in the development part. Thus, whether the added liquid sample is sufficient can be quickly determined and the reliability and measurement accuracy can be improved.

Brief Description of Drawings

[Fig. 1] Fig. 1 is a view schematically illustrating the configuration of a quantitative measuring apparatus and a biosensor according to a first embodiment of the invention.

[Fig. 2] Fig. 2 is a graph illustrating variation in a development speed as a function of an additive quantity of a liquid sample according to the first embodiment of the invention.

[Fig. 3A] Fig. 3A is a view illustrating the state in which an excess or lack of an additive quantity is detected based on the development speed with reference to a mark according to a second embodiment of the invention.

[Fig. 3B] Fig. 3B is a view illustrating the state in which an excess or lack of the additive quantity is detected based on the development speed with reference to an end portion according to the second embodiment of the invention.

[Fig. 4A] Fig. 4A is a view schematically illustrating the configuration of a conventional quantitative measuring apparatus.

[Fig. 4B] Fig. 4B is a view illustrating the configuration of a conventional biosensor.

[Fig. 5A] Fig. 5A is a view illustrating the state of development when a liquid sample is sufficiently added in the conventional biosensor.

[Fig. 5B] Fig. 5B is a view illustrating the state of development when a liquid sample is not sufficiently added in the conventional biosensor.

Best Mode for Carrying Out the Invention

Hereinafter, a biosensor and a measuring method using the same according to embodiments of the invention will be specifically described with reference to the drawings.

(First Embodiment)

Hereinafter, a measuring method using a biosensor according to the first embodiment of the invention will be described.

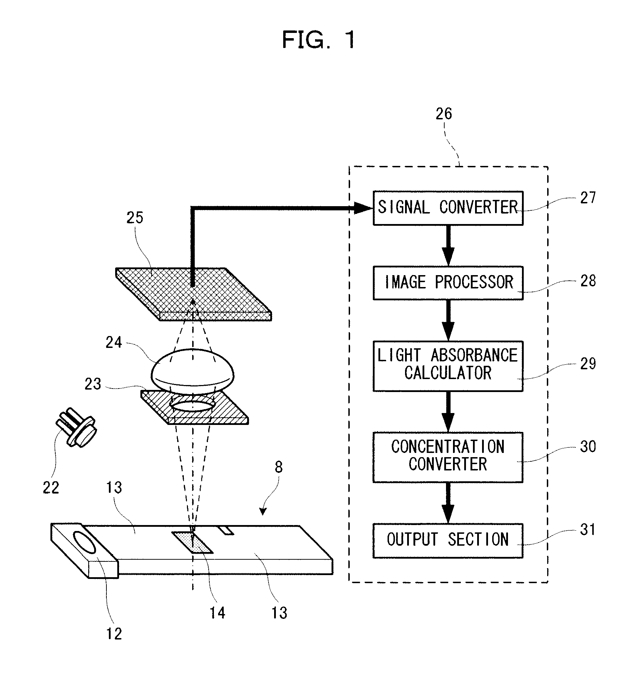

Fig. 1 is a view schematically illustrating the configuration of a quantitative measuring apparatus and a biosensor according to the first embodiment. In Fig. 1, the same elements as those of Fig. 4A and 4B are indicated by the same reference numerals.

The measuring apparatus shown in Fig. 1 includes a light emitting device 22, a diaphragm 23, a light collecting lens 24, an imaging device 25 and a gauging unit 26.

The light emitting device 22 is a lamp, a light emitting diode or the like to illuminate a biosensor 8. The diaphragm 23 reduces scattered light from the biosensor 8. The light collecting lens 24 allows the scattered light to be collected on the imaging device 25. The imaging device 25 converts the collected light into an electrical signal.

In the gauging unit 26, a signal converter 27 converts the electrical signal from the imaging device 25 to a digital signal. An image processor 28 performs image processing of removing noise components and extracting measurement regions for pixels of the imaging device 25. After the image processing is performed, a light absorbance calculator 29 calculates the light absorbance of a reaction part 14, a concentration converter 30 calculates the concentration of an object to be analyzed from a concentration conversion equation input in advance, and an output section 31 displays the concentration of the object to be analyzed.

The biosensor 8 includes a supply part 12 to which a constant quantity of a liquid sample is added, a development part 13 in which the liquid sample is developed, and a reaction part 14 which develops a color of the liquid sample according to the concentration of an object to be analyzed contained in the liquid sample.

Next, the measuring method according to the first embodiment will be described in detail.

Light is irradiated from the light emitting device 22, so that the biosensor 8 is illuminated. It is preferable to use a light emitting diode having a wavelength of 610nm for the light emitting device 22. The wavelength fulfills a condition that the light absorbance difference between gold colloid of a labeling reagent and blood (red blood cell) of a sample is sufficiently obtained. Further, even when a lamp is used for the light emitting device 22 and the wavelength thereof is limited using an optical filter, the same effect is obtained. The light scattered from the biosensor 8 is reduced by the diaphragm 23, and is collected on the imaging device 25 by the light collecting lens 24. The electrical signal from the imaging device 25 is converted to the digital signal by the converter 27, and the image processor 28 performs the image processing of removing the noise components for the pixels of the imaging device 25. After the image processing is performed, the light absorbance calculator 29 calculates the light absorbance of the reaction part 14, the concentration converter 30 calculates the concentration of the object to be analyzed from the concentration conversion equation input in advance, and the output section 31 displays the concentration of the object to be analyzed.

The liquid sample is supplied to the supply part 12, the liquid sample is developed in the development part 13, and the reaction part 14 develops a color according to the concentration of the object to be analyzed, so that the light absorbance of the reaction part 14 is read. At this time, the development speed at which the liquid sample is developed in the development part is read, so that the quantity of the liquid sample supplied to the supply part 12 can be measured.

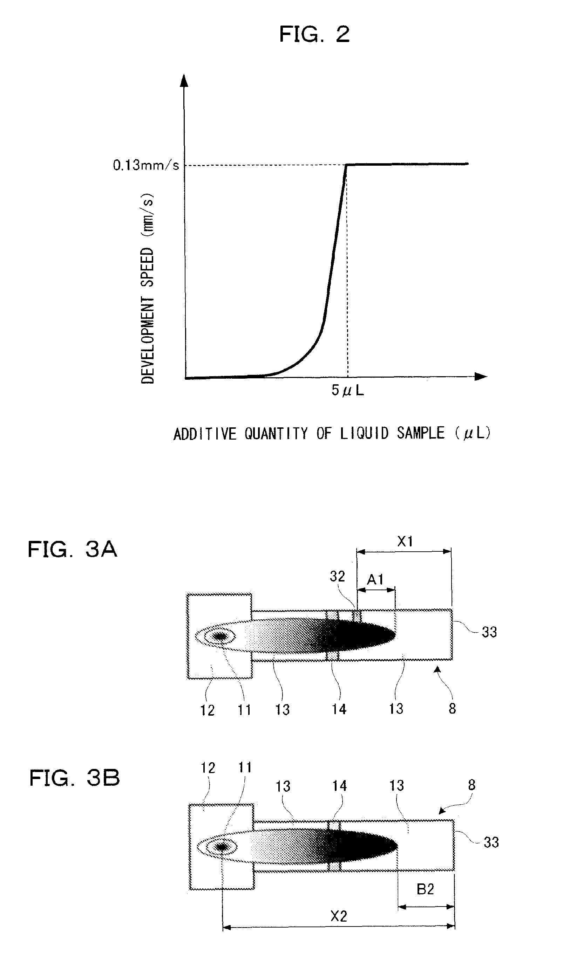

Fig. 2 is a graph illustrating variation in development speed as a function of an additive quantity of the liquid sample according to the first embodiment of the invention. In the case of the biosensor 8 requiring an additive quantity of 5 μL, the development part 13 is designed to be 2mmx20mm such that the liquid sample is developed by 5 μL, and a nitrocellulose membrane having a flow rate of 220 (Sec/4cm) is used. Since the imaging device 25 includes 1.5 million pixels and an optical structure of 6-fold magnification, an area of the biosensor 8 per one pixel corresponds to a resolution of 15 μm×15 μm. Thus, the development speed can be measured instantly or easily by the movement time of the development of the liquid sample from pixel to pixel. In the biosensor 8 including the development part 13 designed to be 2mmx20mm such that the liquid sample of 5 μL is developed, when the liquid sample of 5 μL or more is developed, the development speed is 0.13 mm/s. When the additive quantity is below 5 μL, the development speed is reduced from 0.13 mm/s. Thus, when the additive quantity of the liquid sample is below 5 μL by measuring the development speed, the additive quantity can be detected in 0.1-μL units, so that an insufficient quantity of the liquid added can be instantly determined. Herein, the case where the required additive quantity is 5 μL has been described. However, even in any additive quantity, the maximum development speed calculated from a relation between the required additive quantity and the size of the development part 13, is compared with the development speed calculated from time over which the front end image of the liquid sample moves among pixels, so that an excess or lack of the additive quantity of the liquid sample can be detected.

Further, measurement can be easily performed using a simpler apparatus structure of an imaging apparatus. However, even in an apparatus structure in which a semiconductor laser and a photodiode identical to those of the conventional example are used, a mechanism that moves an optical unit or a biosensor is provided, so that the same effect can be obtained.

(Second Embodiment)

Hereinafter, a measuring method using a biosensor according to the second embodiment of the invention will be described.

Figs. 3A and 3B are views illustrating the state of development of a liquid sample added in the biosensor according to the second embodiment. Fig. 3A is a view illustrating the state in which an excess or lack of an additive quantity is detected based on the development speed with reference to a mark according to the second embodiment of the invention, and Fig. 3B is a view illustrating the state in which an excess or lack of the additive quantity is detected based on the development speed with reference to an end portion according to the second embodiment of the invention. In Figs. 3A and 3B, the same elements as those of Fig. 1 are indicated by the same reference numerals, and the explanation thereof is omitted.

In Figs. 3A and 3B, a liquid sample 11 is added to a supply part 12 of a biosensor 8 and is developed at a development speed V1 on a development layer 13 to arrive at an end portion 33.

In Fig. 3A, a mark 32 is given in advance in the vicinity of the development layer 13 by using a pigment, and arrival time when the liquid sample 11 arrives at the end portion 33 from the mark 32 as a position reference is calculated. If a distance from the mark 32 to the end portion 33 is defined as X1, a distance from the mark 32 to a position where the development reaches is defined as A1, and a development speed is defined as V1, an arrival time T1 is expressed by an equation below.

$$T1 = (X1 - A1)/V1 + A1/V1$$

Arrival time with respect to the quantity of the liquid sample added is measured in advance, and then the measured value is compared with the arrival time T1 calculated by the development speed V1, so that the development speed is reduced according to an insufficient quantity of the liquid sample with respect to the required additive quantity. Consequently, the quantity of the liquid sample added can be detected in 0.1 $\mu$L-units, so that the insufficient quantity of the liquid added can be instantly determined.

Further, measurement of a reaction part 14 can be performed with the highest accuracy because a reaction state or the dryness of the liquid sample is stabilized after the liquid sample has arrived at the end portion 33. Thus, the arrival time at the end portion 33 can be easily determined, so that the measurement time of the reaction part 14 can be specified and measurement with high accuracy is possible. Simultaneously with the measurement of the reaction part 14, the arrival position of the liquid sample is confirmed, so that development defects such as clogging in the development layer 13 after the detection of the development speed and the development position can be confirmed, and the reliability of the measurement can be further improved.

In Fig. 3B, the end portion 33 is set as the position reference, and arrival time from the addition of the liquid sample to the arrival at the end portion 33 is calculated. When a distance from an addition position to the end portion 33 is defined as X2, a distance from the end portion 33 to a position where the development reaches is defined as B2, and a development speed is defined as V1, an arrival time T2 is expressed by an equation below.

$$T2 = (X2 - B2)/V1 + B2/V1$$

Arrival time with respect to the quantity of the liquid sample added is measured in advance, and then the measured value is compared with the arrival time T2 calculated by the development speed V1, so that the quantity of the liquid sample added can be detected in 0.1-$\mu$L units. Thus, an insufficient quantity of the liquid added can be instantly determined. Further, since the end portion 33 is set as the position reference, the mark 32 does not have to be given in advance on the development layer 13 by using a pigment, so that the biosensor 8 can be formed with a simple configuration.

Further, the measurement of the reaction part 14 can be performed with the highest accuracy because the reaction state or the dryness of the liquid sample is stabilized after the liquid sample has arrived at the end portion 33. Thus, the arrival time at the end portion 33 can be easily determined, so that the measurement time of the reaction part 14 can be specified and the measurement with high accuracy is possible. Simultaneously with the measurement of the reaction part 14, the arrival position of the liquid sample is confirmed, so that development defects such as clogging in the development layer 13 after the detection of the development speed and the development position can be confirmed, and the reliability of the measurement can be further improved.

Herein, since the method of measuring the development speed and confirming the development state is identical to that of the first embodiment, the detailed description thereof is omitted.

Industrial Applicability

The measuring method according to the invention can be quickly performed with high reliability and accuracy, and can be used as a measuring method using a biosensor for performing the analysis of a biological sample.

Claims

1. A measuring method using a biosensor, the biosensor including a supply part to which a constant quantity of a liquid sample is added, a development part in which the liquid sample is developed, and a reaction part in which the liquid sample undergoes a reaction, the method comprising:, when measuring a concentration of an object to be analyzed contained in the liquid sample,

detecting a development speed at which the liquid sample is developed in the development part; and detecting an insufficient quantity of the liquid sample added to the supply part, based on the development speed.

2. The measuring method using a biosensor according to Claim 1, wherein the development speed is detected using an imaging device.

3. The measuring method using a biosensor according to Claim 2, wherein the development speed is calculated from time over which a front end image of the liquid sample moves among pixels of the imaging device.

4. The measuring method using a biosensor according to Claim 3, wherein the insufficient quantity of the added liquid sample is detected by comparing a maximum development speed calculated from a relation between a required quantity of the liquid sample added and a size of the development part, with the detected development speed.

5. The measuring method using a biosensor according to Claim 1, wherein a position reference arbitrarily set is detected, the development speed and arrival time at which the liquid sample arrives at a downstream end portion of the development part from the position reference, are calculated, and the insufficient quantity of the liquid sample added to the supply part is detected based on the arrival time.

6. The measuring method using a biosensor according to Claim 5, wherein the position reference is a mark provided at the downstream end portion of the development part or in a vicinity of the development part.

7. The measuring method using a biosensor according to Claim 5, wherein the arrival time indicates time to when the liquid sample arrives at the downstream end portion of the development part from addition time when the liquid sample is added to the supply part, the addition time being calculated based on the position reference and the development speed.

8. The measuring method using a biosensor according to Claim 5, wherein the development speed is detected using an imaging device.

9. The measuring method using a biosensor according to Claim 8, wherein the development speed is calculated from time over which a front end image of the liquid sample moves among pixels of the imaging device.

10. The measuring method using a biosensor according to Claim 5, wherein a measurement of the reaction part is performed after the liquid sample arrives at the downstream end portion.

11. The measuring method using a biosensor according to Claim 10, wherein, during the measurement of the reaction part, arrival of the liquid sample at the downstream end portion of the development part is confirmed through development of the liquid sample.

# FIG. 1

SIGNAL CONVERTER — 27

IMAGE PROCESSOR — 28

LIGHT ABSORBANCE CALCULATOR — 29

CONCENTRATION CONVERTER — 30

OUTPUT SECTION — 31

26

25

24

23

22

13

8

14

13

12

# FIG. 2

# FIG. 3A

# FIG. 3B

# FIG. 4A

PRIOR ART

DEVELOPMENT DIRECTION

# FIG. 4B

PRIOR ART

# FIG. 5A

PRIOR ART

15
16

12  11  13  14  13  8

# FIG. 5B

PRIOR ART

15
16

12  11  13  14  13  8

## INTERNATIONAL SEARCH REPORT

| | International application No. |
|---|---|
| | PCT/JP2008/002647 |

A. CLASSIFICATION OF SUBJECT MATTER
*G01N33/543*(2006.01)i, *G01N21/27*(2006.01)i, *G01N21/78*(2006.01)i

According to International Patent Classification (IPC) or to both national classification and IPC

B. FIELDS SEARCHED

Minimum documentation searched (classification system followed by classification symbols)
G01N33/543, G01N21/27, G01N21/78

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 3053494 U (Eiken Chemical Co., Ltd.), 27 October, 1998 (27.10.98), Full text (Family: none) | 1-11 |
| A | JP 2007-114097 A (Rohto Pharmaceutical Co., Ltd.), 10 May, 2007 (10.05.07), Full text (Family: none) | 1-11 |
| A | JP 1-21467 B2 (Aloka Co., Ltd.), 21 April, 1989 (21.04.89), Full text (Family: none) | 1-11 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 November, 2008 (11.11.08) | 25 November, 2008 (25.11.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/002647

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-162496 A  (Matsushita Electric Industrial Co., Ltd.), 22 June, 2006 (22.06.06), Full text (Family: none) | 1-11 |

Form PCT/ISA/210 (continuation of second sheet) (April 2007)

**REFERENCES CITED IN THE DESCRIPTION**

**Patent documents cited in the description**

• JP 2003004743 A